# EUROPEAN PATENT SPECIFICATION

(11) **EP 4 102 479 B1**
(45) Date of publication and mention of the grant of the patent: **06.11.2024**
(21) Application number: 22177900.2
(22) Date of filing: 08.06.2022
(51) Int. Cl.: G08B 29/04, G08B 29/14, G08B 29/24

(54) **APPARATUS AND METHOD FOR VERIFYING OPTICAL FUNCTIONALITY IN A CHAMBERLESS SMOKE DETECTOR**
VORRICHTUNG UND VERFAHREN ZUR ÜBERPRÜFUNG DER OPTISCHEN FUNKTIONALITÄT IN EINEM KAMMERLOSEN RAUCHMELDER
APPAREIL ET PROCÉDÉ PERMETTANT DE VÉRIFIER UNE FONCTIONNALITÉ OPTIQUE DANS UN DÉTECTEUR DE FUMÉE SANS CHAMBRE

(30) Priority: 09.06.2021 US 202163208729 P
(43) Date of publication of application: 14.12.2022
(73) Proprietor: Carrier Corporation, Palm Beach Gardens, FL 33418 (US)
(72) Inventor: CULP, Slade R., Bradenton, FL 34202 (US); VIDULICH, Joseph Anthony, Bradenton, FL 34202 (US)
(74) Representative: Dehns

(56) References cited:
- EP-B1- 1 728 224
- DE-A1- 102013 003 614
- US-A1- 2013 176 131

## Description

The embodiments disclosed herein relate to smoke detectors and, more particularly, to photoelectric smoke detectors.

A smoke detector is a device that detects smoke and issues an alarm. A photoelectric smoke detector is a type of smoke detector that works based on light reflection principals and generally includes a light emitter, a light receiver, and an optic chamber. When there is no smoke in the optic chamber and the optic chamber is empty or mostly empty, the light receiver typically receives a small amount of light reflected from chamber surfaces. On the other hand, when smoke is present in the optic chamber, the light receiver receives more light due to that light being reflected from the smoke particles. When an amount of the received light exceeds a threshold level, an alarm is triggered. Chamberless (open) smoke detectors also have a light emitter and a light receiver but do not use an optic chamber.

The light emitter must be periodically evaluated to ascertain that the light is being emitted as expected and the light receiver is working as expected. While methods and apparatus for evaluating light emitter function is established for smoke detectors having an optic chamber there is a need for methods and apparatus for evaluating light emitter function in chamberless smoke detectors.

DE 10 2013 003614 A1 discloses a chamberless smoke detector arranged to detect if an opaque cover is placed over the surface of the smoke detector using a light emitter, a light receiver and a transparent component arranged to transmit all light emitted by the light emitter to the light receiver.

Viewed from a first aspect, there is provided a chamberless smoke detector as claimed in claim 1.

The transparent sheet may be in contact with the at least one light emitter, the at least one light receiver, or both.

The transparent sheet may be a sheet of glass, plastic, or sapphire. The sheet may have a thickness of 0.01 to 0.1 inches, or, 0.01 to 0.05 inches.

The at least one light receiver may receive light at different angles.

The at least one light emitter may emit multiple wavelengths.

The smoke detector may include a light mold.

The transparent sheet may have anti-static properties, hydrophobic properties, hydrophilic properties, a combination of anti-static and hydrophobic properties, or a combination of anti-static and hydrophilic properties. These properties may be the result of coatings or the result of multiple layers.

Viewed from a second aspect, there is provided a method for evaluating light emitter function of a chamberless smoke detector, the method as claimed in claim 11.

The control unit may alter electrical control of the light emitter, the light receiver or both based on evaluation of the conveyed signal.

Transmitting light from at least one light emitter may be performed at a single current and evaluating the conveyed signal comprises comparing the conveyed signal to a baseline value.

Transmitting light from at least one light emitter may be performed at multiple currents and results in multiple signals which are evaluated by determining a change in conveyed signal to current and comparing the change to a threshold value.

The following descriptions should not be considered limiting in any way. With reference to the accompanying drawings, like elements are numbered alike:
FIG. 1 is a cross section of an exemplary smoke detector; and
FIG. 2 is a top view of an exemplary smoke detector.

A detailed description of one or more embodiments of the disclosed apparatus and method are presented herein by way of exemplification and not limitation with reference to the Figures.

Light emitting diodes (LED) age during operation and over time have reduced light output. Light receivers such as photodiodes have negligible aging. LED performance needs to be monitored to maintain smoke detector functionality. Previously, LED performance has been monitored and evaluated by using a light receiver directly optically coupled to the LED or by using a light receiver for detecting light reflected by a surface within the detector.

In contrast, the apparatus and method described herein employ light laterally transmitted within a transparent sheet to evaluate the performance of the light emitter in a chamberless smoke detector. Chamberless smoke detectors do not require the introduction of a gas sample or particulate matter into a chamber. Light laterally transmitted within a transparent sheet is typically described as cross talk and contributes to the signal noise in an optical detection system. Surprisingly, the signal generated by the light receiver in response to the light laterally transmitted within a transparent sheet can be used to evaluate the condition of the light emitter. By using different drive currents the change in counts (signal) compared to current can be used to evaluate the output of the LED. If a single drive current is used then decreased light intensity compared to a baseline value indicates decreased output from the LED. The magnitude of the output decrease determines whether the current to the LED can be increased to increase output, the gain of the photo receiver increased, or if LED replacement is required.

Furthermore, the presence of dust or debris on the transparent sheet can be detected as well. A single current may be used to detect dust or debris by comparing the change in signal to a baseline value. If the light intensity increases compared to the baseline value then dust accumulation is indicated. Additionally, the rate of change in signal can be used to distinguish an obstruction from dust or debris accumulation.

The change in the intensity of received light at multiple wavelengths relative to baseline values can also be used to evaluate LED output and dust accumulation.

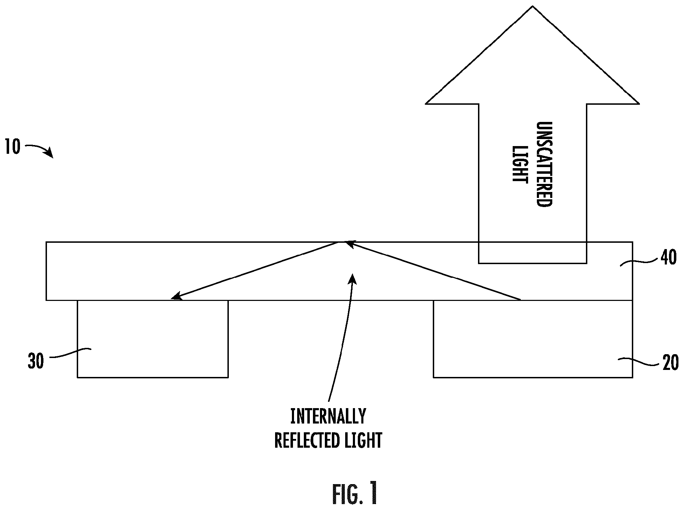

FIG. 1 is a cross section of a smoke detector 10 having a light emitter 20, a light receiver 30, and a transparent sheet 40 located above the light emitter and the light receiver. In embodiments where there is more than one light receiver each receiver may have a transparent sheet located above the receiver and optically connected to one or more emitters. It is also contemplated that a transparent sheet may extend over multiple light receivers. The transparent sheet may be optically connected to multiple light emitters.

The light emitter pulses light and a portion of the emitted light passes into the transparent sheet and is transmitted laterally to the light receiver 20. The light receiver converts the laterally transmitted light to a signal that is evaluated by a control unit (not shown).

In embodiments where a single current to the emitter is used the control unit compares the signal to a baseline value and the difference from the baseline value is compared to a threshold value. The control unit then modifies control of the LED as needed or sends a failure warning for replacement.

In embodiments where multiple currents to the emitter are used the control unit determines the slope of the received signal to current and compares the slope to a threshold value. The control unit then modifies control of the LED as needed or sends a failure warning for replacement.

The transparent sheet can be in contact with the light emitter, the light receiver or both. The transparent sheet can be formed from glass, plastic, or sapphire. The transparent sheet may have a thickness of 0.01 to 0.10 inches, or, 0.01 to 0.05 inches. The transparent sheet may be a layered material. Additionally, it is contemplated that multiple sheets could be bridged together laterally to extend over the light emitter and light receiver.

The transparent sheet may have anti-static properties, hydrophobic properties, hydrophilic properties, a combination of anti-static and hydrophobic properties, or a combination of anti-static and hydrophilic properties. These properties may be the result of coatings or the transparent sheet may be a layered material which includes one or more layers that provide anti-static properties, hydrophobic properties, hydrophilic properties, a combination of anti-static and hydrophobic properties, or a combination of anti-static and hydrophilic properties.

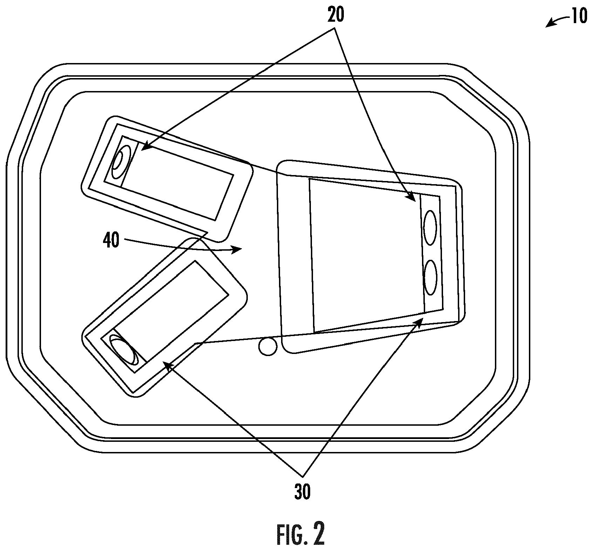

FIG. 2 is a top view of a smoke detector 10 having two light emitters 20, two light receivers 30, and a transparent sheet 40 extending over the light emitters and light receivers.

In this specification, the term "light" means coherent or incoherent radiation at any frequency or a combination of frequencies in the electromagnetic spectrum. The smoke detector 10 uses light scattering to determine the presence of particles in the sampling space to indicate the existence of a threshold condition or event. In this specification, the term "scattered light" may include any change to the amplitude/intensity or direction of the incident light, including reflection, refraction, diffraction, absorption, and scattering in any/all directions. Light is emitted through the transparent sheet into a space; when the light encounters an object suspended (i.e. floating) within the surrounding medium (air) (a smoke particle or gas molecule for example), the light will be scattered and/or absorbed due to a difference in the refractive index of the object compared to the surrounding medium (air). Depending on the object, the light can be scattered in all different directions. Detecting light scattered by an object can provide information about the space including determining the presence of a threshold condition or event.

Light scattering is a physical property attributed to the interaction of light with the atoms or surface that make up the material. The angle of redirection for light emitted from a source is dependent on the material composition and geometry. The redirection of light can be isotropic, where every angle receives the same quantity of radiation. In addition, the redirection of light can be anisotropic or the redirection of a quantity of light non-uniformly with respect to angle. The amount of anisotropy is dependent on the optical and electronic properties combined with geometric properties of the material. The anisotropy is also frequency dependent. In practice this principle can be utilized for discriminating one material from another material; a group of materials from another group of materials; or combinations of materials and groups of materials.

The smoke detector 10 includes at least one light emitter and at least one light receiver. The at least one emitter may be capable of emitting multiple wavelengths. Multiple emitters may be used to generate multiple wavelengths. The at least one receiver may be capable of detecting (receiving) multiple wavelengths. The ability to emit and detect multiple wavelengths facilitates in distinguishing different types of materials in the sampling space. The emitter and receiver may include fiber optic cables, laser diodes, photodiodes, or other types of light production and reception.

The light interacts with any particles present in the space adjacent to the smoke detector and is reflected or transmitted back to the receiver. A comparison of the light provided by the emitter and/or changes to the light reflected back to the receiver will indicate whether or not changes in the atmosphere are present in the space that are causing the scattering of the light. The scattered light as described herein is intended to additionally include reflected, transmitted, and absorbed light. Although the detection system is described as using light scattering to determine a condition or event, embodiments where light obscuration, absorption, and fluorescence is used in addition to or in place of light scattering are also within the scope of the invention as defined by the claims.

In some embodiments, light from the smoke detector passes through a light mold, guide, lens, or other distribution device. The light mold enables collection of light from multiple angles. The light mold can be fabricated from any suitable material, including but not limited to, fiber optics, free space optics, molded plastic optics or photonic integrated circuits for example. In addition, the light mold and the emitter, receiver or both may be integrated.

The smoke detector 10 may be used to distinguish smoke from other types of hazardous conditions or nuisances. Each emitter is associated with one or more receivers for collecting/receiving scattered light from the space. Each of the one or more of receivers is oriented at a different angle relative to the emitter. For example, a first angle is formed between the emitter and the first receiver, and a second angle is formed between the emitter and the second receiver. The first angle and the second angle are known and are distinct. In some embodiments, the different angles can be achieved by physically orienting/positioning the receivers differently. In other embodiments, the different angles can be achieved by using a plurality of emitters. In other embodiments, a light mold can be used to receive scattered light from different scattering angles at the one or more receivers. The light mold can be operably connected to and configured to support the emitter and the plurality of receivers such that the plurality of receivers each receive scattered light from a desired angle.

The photoelectric detection system may include a control unit (not shown). The control unit may be utilized to manage the detection system operation and may include control of components, data acquisition, data processing and data analysis. In some embodiments the detection system may include other components to detect other conditions such as air quality. The control unit includes a processor and memory. Exemplary processors include microprocessors, system on a chip (SOC), field programmable gate array (FGPA), and the like. The processor may be coupled to the at least one light emitter and the at least one light receiver. The at least one light receiver is configured to convert the received scattered light into a corresponding signal receivable by the processor. The signal outputs may be compared by the processor to the signal from the emitted light to determine whether a threshold condition is present.

In addition to being operably coupled to the at least one emitter and to the at least one receiver, the control unit may be associated with one or more input/output devices. In an embodiment, the input/output devices may include an alarm or other signal, or a fire suppression system which are activated upon detection of a predefined event or condition. It should be understood herein that the term alarm, as used herein, may indicate any of the possible outcomes of a detection.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components and include embodiments which consist of the stated features, integers, steps, operations, elements, and/or components. The terms "comprises" and/or "comprising," do not preclude the presence or addition of one or more other features, integers, steps, operations, element components, and/or groups thereof.

In addition, many modifications may be made to adapt a particular situation or material to the teachings of the present disclosure without departing from the scope of the claims. Therefore, it is intended that the present invention not be limited to the particular embodiment disclosed as the best mode contemplated for carrying out this present invention, but that the present invention will include all embodiments falling within the scope of the claims.

## Claims

1. A chamberless smoke detector (10) comprising at least one light emitter (20) configured to emit light, at least one light receiver (30) configured to receive light, and a transparent sheet (40) extending over the at least one light emitter (20) and the at least one light receiver (30);
**characterized in that**:
a first portion of the emitted light passes into the transparent sheet and is transmitted laterally to the light receiver to evaluate performance of the light emitter; and
a second portion of the emitted light passes through the transparent sheet into a space and is scattered back to the light receiver to determine the presence of a threshold condition or event.

2. The smoke detector (10) of claim 1, wherein the transparent sheet (40) is in contact with the at least one light emitter (20), the at least one light receiver (30), or both.

3. The smoke detector (10) of claim 1 or 2, wherein the transparent sheet (40) is a sheet of glass, plastic, or sapphire.

4. The smoke detector (10) of claim 1, 2 or 3, wherein the transparent sheet (40) has a thickness of 0.01 to 0.1 inches.

5. The smoke detector (10) of claim 1, wherein the transparent sheet (40) has a thickness of 0.01 to 0.05 inches.

6. The smoke detector (10) of any preceding claim, wherein the at least one light receiver (30) receives light at different angles.

7. The smoke detector (10) of any preceding claim, wherein the at least one light receiver (30) detects multiple wavelengths.

8. The smoke detector (10) of any preceding claim, further comprising a light mold.

9. The smoke detector (10) of any preceding claim, wherein the transparent sheet (40) has anti-static properties, hydrophobic properties, hydrophilic properties, a combination of anti-static and hydrophobic properties, or a combination of anti-static and hydrophilic properties.

10. The smoke detector (10) of claim 9, wherein the anti-static properties, hydrophobic properties, or hydrophilic properties are the result of a coating; or
wherein the transparent sheet (40) has multiple layers and the anti-static properties, hydrophobic properties, or hydrophilic properties are the result of one or more layers.

11. A method for evaluating light emitter function of a chamberless smoke detector (10), wherein the chamberless smoke detector (10) is a chamberless smoke detector as claimed in any preceding claim, the method comprising: transmitting light from the at least one light emitter (20) laterally through the transparent sheet (40) to the at least one light receiver (30), converting the received light to a signal, conveying the signal to a control unit and evaluating the conveyed signal.

12. The method of claim 11, wherein the control unit alters electrical control of the light receiver (30) based on evaluation of the conveyed signal.

13. The method of claim 11 or 12, wherein the control unit alters electrical control of the light emitter (20) based on evaluation of the conveyed signal.

14. The method of claim 13, wherein transmitting light from at least one light emitter (20) is performed at a single current and evaluating the conveyed signal comprises comparing the conveyed signal to a baseline value.

15. The method of claim 13, wherein transmitting light from at least one light emitter (20) is performed at multiple currents and evaluating the conveyed signal comprises determining a change in conveyed signal to current and comparing the change to a threshold value.

## Patentansprüche

1. Kammerloser Rauchmelder (10), umfassend mindestens einen Lichtemitter (20), der dazu konfiguriert ist, Licht zu emittieren, mindestens einen Lichtempfänger (30), der dazu konfiguriert ist, Licht zu empfangen, und eine durchsichtige Platte (40), die sich über den mindestens einen Lichtemitter (20) und den mindestens einen Lichtempfänger (30) erstreckt; **dadurch gekennzeichnet, dass**:
ein erster Teil des emittierten Lichts in die durchsichtige Platte eintritt und seitlich zu dem Lichtempfänger übertragen wird, um die Leistung des Lichtemitters zu bewerten; und
ein zweiter Teil des emittierten Lichts durch die durchsichtige Platte in einen Raum eintritt und zu dem Lichtempfänger zurückgestreut wird, um die Anwesenheit einer Schwellenbedingung oder eines Schwellenereignisses zu bestimmen.

2. Rauchmelder (10) nach Anspruch 1, wobei die durchsichtige Platte (40) mit dem mindestens einen Lichtemitter (20), dem mindestens einen Lichtempfänger (30) oder beiden in Kontakt steht.

3. Rauchmelder (10) nach Anspruch 1 oder 2, wobei die durchsichtige Platte (40) eine Platte aus Glas, Kunststoff oder Saphir ist.

4. Rauchmelder (10) nach Anspruch 1, 2 oder 3, wobei die durchsichtige Platte (40) eine Stärke von 0,01 bis 0,1 Zoll aufweist.

5. Rauchmelder (10) nach Anspruch 1, wobei die durchsichtige Platte (40) eine Stärke von 0,01 bis 0,05 Zoll aufweist.

6. Rauchmelder (10) nach einem der vorhergehenden Ansprüche, wobei der mindestens eine Lichtempfänger (30) Licht unter verschiedenen Winkeln empfängt.

7. Rauchmelder (10) nach einem der vorhergehenden Ansprüche, wobei der mindestens eine Lichtempfänger (30) mehrere Wellenlängen erkennt.

8. Rauchmelder (10) nach einem der vorhergehenden Ansprüche, ferner umfassend eine Lichtform.

9. Rauchmelder (10) nach einem der vorhergehenden Ansprüche, wobei die durchsichtige Platte (40) antistatische Eigenschaften, hydrophobe Eigenschaften, hydrophile Eigenschaften, eine Kombination aus antistatischen und hydrophoben Eigenschaften oder eine Kombination aus antistatischen und hydrophilen Eigenschaften aufweist.

10. Rauchmelder (10) nach Anspruch 9, wobei die antistatischen Eigenschaften, hydrophoben Eigenschaften oder hydrophilen Eigenschaften das Ergebnis einer Beschichtung sind; oder
wobei die durchsichtige Platte (40) mehrere Schichten aufweist und die antistatischen Eigenschaften, hydrophoben Eigenschaften oder hydrophilen Eigenschaften das Ergebnis einer oder mehrerer Schichten sind.

11. Verfahren zum Bewerten der Lichtemitterfunktion eines kammerlosen Rauchmelders (10), wobei der kammerlose Rauchmelder (10) ein kammerloser Rauchmelder nach einem der vorhergehenden Ansprüche ist, wobei das Verfahren Folgendes umfasst: Übertragen von Licht von dem mindestens einen Lichtemitter (20) seitlich durch die durchsichtige Platte (40) zu dem mindestens einen Lichtempfänger (30), Konvertieren des empfangenen Lichts in ein Signal, Übermitteln des Signals an eine Steuereinheit und Bewerten des übermittelten Signals.

12. Verfahren nach Anspruch 11, wobei die Steuereinheit die elektrische Steuerung des Lichtempfängers (30) basierend auf der Bewertung des übermittelten Signals ändert.

13. Verfahren nach Anspruch 11 oder 12, wobei die Steuereinheit die elektrische Steuerung des Lichtemitters (20) basierend auf der Bewertung des übermittelten Signals ändert.

14. Verfahren nach Anspruch 13, wobei das Übertragen von Licht von mindestens einem Lichtemitter (20) mit einem einzigen Strom durchgeführt wird und das Bewerten des übermittelten Signals Vergleichen des übermittelten Signals mit einem Basiswert umfasst.

15. Verfahren nach Anspruch 13, wobei das Übertragen von Licht von mindestens einem Lichtemitter (20) mit mehreren Strömen durchgeführt wird und das Bewerten des übermittelten Signals Bestimmen einer Änderung des übermittelten Signals bezüglich des Stroms und Vergleichen der Änderung mit einem Schwellenwert umfasst.

## Revendications

1. Détecteur de fumée sans chambre (10) comprenant au moins un émetteur de lumière (20) configuré pour émettre de la lumière, au moins un récepteur de lumière (30) configuré pour recevoir de la lumière, et une feuille transparente (40) se prolongeant sur l'au moins un émetteur de lumière (20) et l'au moins un récepteur de lumière (30) ;
**caractérisé en ce que** :
une première partie de la lumière émise passe dans la feuille transparente et est transmise latéralement au récepteur de lumière pour évaluer les performances de l'émetteur de lumière ; et
une seconde partie de la lumière émise traverse la feuille transparente dans un espace et est renvoyée vers le récepteur de lumière pour déterminer la présence d'une condition ou d'un événement seuil.

2. Détecteur de fumée (10) selon la revendication 1, dans lequel la feuille transparente (40) est en contact avec l'au moins un émetteur de lumière (20), l'au moins un récepteur de lumière (30), ou les deux.

3. Détecteur de fumée (10) selon la revendication 1 ou 2, dans lequel la feuille transparente (40) est une feuille de verre, de plastique ou de saphir.

4. Détecteur de fumée (10) selon la revendication 1, 2 ou 3, dans lequel la feuille transparente (40) a une épaisseur de 0,01 à 0,1 pouce.

5. Détecteur de fumée (10) selon la revendication 1, dans lequel la feuille transparente (40) a une épaisseur de 0,01 à 0,05 pouce.

6. Détecteur de fumée (10) selon une quelconque revendication précédente, dans lequel l'au moins un récepteur de lumière (30) reçoit de la lumière selon différents angles.

7. Détecteur de fumée (10) selon une quelconque revendication précédente, dans lequel l'au moins un récepteur de lumière (30) détectent de multiples longueurs d'onde.

8. Détecteur de fumée (10) selon une quelconque revendication précédente, comprenant également un moule de lumière.

9. Détecteur de fumée (10) selon une quelconque revendication précédente, dans lequel la feuille transparente (40) a des propriétés antistatiques, des propriétés hydrophobes, des propriétés hydrophiles, une combinaison de propriétés antistatiques et hydrophobes, ou une combinaison de propriétés antistatiques et hydrophiles.

10. Détecteur de fumée (10) selon la revendication 9, dans lequel les propriétés antistatiques, les propriétés hydrophobes ou les propriétés hydrophiles sont le résultat d'un revêtement ; ou
dans lequel la feuille transparente (40) a de multiples couches et les propriétés antistatiques, les propriétés hydrophobes ou les propriétés hydrophiles sont le résultat d'une ou de plusieurs couches.

11. Procédé d'évaluation de la fonction d'émetteur de lumière d'un détecteur de fumée sans chambre (10), dans lequel le détecteur de fumée sans chambre (10) est un détecteur de fumée sans chambre selon une quelconque revendication précédente, le procédé comprenant : la transmission de lumière de l'au moins un émetteur de lumière (20) latéralement à travers la feuille transparente (40) à l'au moins un récepteur de lumière (30), la conversion de la lumière reçue en un signal, le transport du signal vers une unité de commande et l'évaluation du signal transporté.

12. Procédé selon la revendication 11, dans lequel l'unité de commande modifie la commande électrique du récepteur de lumière (30) sur la base de l'évaluation du signal transporté.

13. Procédé selon la revendication 11 ou 12, dans lequel l'unité de commande modifie la commande électrique du récepteur de lumière (20) sur la base de l'évaluation du signal transporté.

14. Procédé selon la revendication 13, dans lequel la transmission de lumière à partir d'au moins un émetteur de lumière (20) est exécutée à un courant unique et l'évaluation du signal transporté comprend la comparaison du signal transporté à une valeur de base.

15. Procédé selon la revendication 13, dans lequel la transmission de lumière à partir d'au moins un émetteur de lumière (20) est exécutée à des courants multiples et l'évaluation du signal transporté comprend la détermination d'un changement du signal transporté en courant et la comparaison du changement à une valeur seuil.
